# FASCICULE DE BREVET EUROPEEN

(11) **EP 3 003 831 B1**
(45) Date de publication et mention de la délivrance du brevet: **19.07.2017**
(21) Numéro de dépôt: 14729960.6
(22) Date de dépôt: 15.05.2014
(51) Int. Cl.: B62D 21/15, B62D 25/02, B60N 2/42, B60N 2/427

(54) **SYSTEME DE STRUCTURE DE CAISSE DE VEHICULE AUTOMOBILE COMPRENANT UN ENTRETOISEMENT DE CHOC LATERAL.**
ROHKAROSSERIESTRUKTURSYSTEM EINES KRAFTFAHRZEUGS MIT EINER SEITENAUFPRALLSTÜTZE
MOTOR VEHICLE BODY SHELL STRUCTURE SYSTEM COMPRISING A SIDE IMPACT BRACE

(30) Priorité: 03.06.2013 FR 1355059
(43) Date de publication de la demande: 13.04.2016
(73) Titulaire: Peugeot Citroën Automobiles SA, 78140 Vélizy Villacoublay (FR)
(72) Inventeur: PERU, Marc, F-92290 Chatenay-Malabry (FR)
(86) Numéro de dépôt international: PCT/FR2014/051131
(87) Numéro de publication internationale: WO 2014/195592

(56) Documents cités:
- DE-A1- 4 212 091
- DE-A1- 19 516 013
- DE-A1-102009 002 377
- FR-A1- 2 974 337
- US-B1- 6 299 239

## Description

La présente invention est relative à un système de structure de caisse de véhicule automobile comprenant un entretoisement de choc latéral.

Plus particulièrement, l'invention concerne un système de structure de caisse de véhicule automobile comprenant un entretoisement de choc latéral, un pied milieu raccordé à un longeron et à une armature de plancher susceptible de recevoir à fixation un siège dans l'habitacle du véhicule à l'intérieur de ladite structure.

Ce genre de système est connu du document FR2974337 dans lequel, pour assurer l'entretoisement de choc latéral, le longeron est équipé d'un impacteur qui est destiné à déplacer latéralement le siège en cas de choc latéral. Cette solution peut donner satisfaction mais elle peut présenter pour inconvénient que le siège doit être prévu pour se déformer en parallélogramme au niveau de flasques inférieurs, en éloignant l'occupant de la zone d'intrusion du pied milieu dans l'habitacle lors du choc latéral. En outre cette solution peut ne pas convenir suivant le type d'architecture de structure de caisse ou le type d'architecture du siège.

La présente invention a notamment pour but de proposer une alternative aux solutions de l'art antérieur.

A cet effet, l'invention a pour objet un système de structure de caisse de véhicule automobile comprenant un entretoisement de choc latéral, un pied milieu raccordé à un longeron et à une armature de plancher susceptible de recevoir à fixation un siège dans l'habitacle du véhicule à l'intérieur de ladite structure. Pour l'entretoisement de choc latéral, le pied milieu supporte, à sa base susceptible d'être au regard d'une ossature du siège, au-dessus du longeron et de l'armature du plancher, un dispositif d'entretoise d'impact orienté transversalement vers l'habitacle et susceptible d'entrer au contact de l'ossature de siège en cas de choc latéral du véhicule déformant transversalement la base du pied milieu. Le dispositif d'entretoise est temporaire en pouvant d'une part constituer suffisamment longtemps une entretoise entre le pied milieu et l'ossature du siège puis d'autre part se compacter pendent le choc latéral.

Dans divers modes de réalisation du système selon l'invention, on peut éventuellement avoir recours en outre à l'une et/ou à l'autre des dispositions suivantes :
- le pied milieu comporte à sa base une tôle de renfort qui supporte le dispositif d'entretoise ;
- le dispositif d'entretoise d'impact est orienté transversalement vers l'habitacle en s'étendant sensiblement horizontalement ;
- le dispositif d'entretoise d'impact comprend deux tubes engagés l'un d'ans l'autre de manière télescopique en pouvant coulisser mutuellement à partir d'un effort déterminé de compression ;
- le dispositif d'entretoise d'impact comprend un tube présentant un affaiblissement local à une portion de sa section ;
- le pied milieu supporte à sa base le dispositif d'entretoise, cette base étant à un tronçon dudit pied milieu comportant une section horizontale sensiblement en U en supportant le dispositif d'entretoise à partir de l'âme sensiblement longitudinale du U ;
- le dispositif d'entretoise d'impact comprend un barreau qui est sensiblement tubulaire.

Par ailleurs, l'invention a également pour objet un véhicule automobile comportant un système de structure de caisse comprenant un pied milieu raccordé à un longeron et à une armature de plancher recevant à fixation un siège dans l'habitacle du véhicule à l'intérieur de ladite structure. Le système de structure de caisse est conforme à l'invention et le pied milieu supporte, à sa base au regard d'une ossature du siège, au-dessus du longeron et de l'armature du plancher, le dispositif d'entretoise d'impact orienté transversalement vers l'habitacle et susceptible d'entrer au contact de l'ossature de siège en cas de choc latéral du véhicule déformant transversalement la base du pied milieu.

Dans un mode de réalisation du véhicule, le système de structure supporte à la base de pied milieu, au-dessus du longeron, un enrouleur de ceinture de sécurité et le dispositif d'entretoise d'impact est à l'avant de l'enrouleur, sensiblement à hauteur de ce dernier.

D'autres buts, caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue en perspective d'un système selon l'invention de structure de caisse pour véhicule automobile, incluant un dispositif d'entretoise d'impact ;
- la figure 2 est une vue schématique de type en coupe, suivant l'axe II-II de la figure 1, du système de structure de caisse selon l'invention, dans un état de repos ;
- la figure 3 est une vue schématique de type en coupe du système de structure de caisse selon l'invention, dans un état de travail à déformation de pied milieu lors d'un test de choc latéral ;
- la figure 4 est une vue schématique de type en coupe d'une variante de montage du dispositif d'entretoise d'impact dans le système de structure de caisse selon l'invention, dans son état de repos ;
- la figure 5 est une vue montrant la face interne d'un dispositif de garnissage de pied milieu pourvu d'aménagements pour s'adapter au système de structure de caisse selon l'invention ;
- la figure 6 est une vue schématique de type en coupe montrant dans son état de repos le système de structure de caisse selon l'invention pourvu d'une variante rétractable du dispositif d'entretoise d'impact ;
- la figure 7 est une vue schématique de type en coupe montrant dans son état de repos le système de structure de caisse selon l'invention pourvu d'une autre variante rétractable du dispositif d'entretoise d'impact ;
- la figure 8 est une vue schématique montrant l'autre variante du dispositif d'entretoise d'impact, dans son état de déformation à rétraction ultérieurement à son état de travail.

En se reportant aux figures, la référence 10 désigne un système de structure de caisse selon l'invention, dans un véhicule automobile. Dans la description qui va suivre, la direction désignée comme longitudinale correspond à l'axe d'avancement du véhicule qui sert ici de référentiel. Sur les différentes figures, les mêmes références désignent des éléments identiques ou similaires.

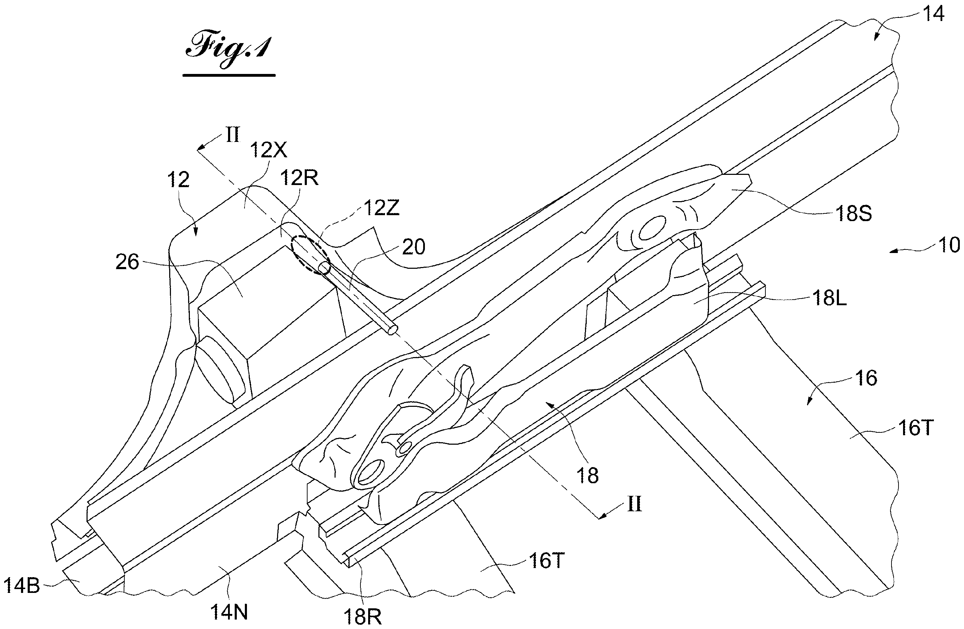

Le système de structure de caisse 10 comprend un pied milieu 12 raccordé à un longeron 14 et à une armature de plancher 16 susceptible de recevoir à fixation dans l'habitacle un siège dont seule une partie basse d'ossature 18 est représentée aux figures. Le pied milieu 12 supporte, à sa base susceptible d'être au regard de l'ossature 18 du siège, au-dessus du longeron 14 et de l'armature de plancher 16, un dispositif d'entretoise d'impact 20 susceptible d'entrer au contact de ladite ossature de siège en cas de choc latéral du véhicule déformant transversalement la base du pied milieu. Le dispositif d'entretoise d'impact 20 est orienté transversalement vers l'intérieur de l'habitacle, en étant masqué de l'habitacle du véhicule par un garnissage 22 qui couvre le pied milieu. A la figure 1, une zone d'implantation 12Z du dispositif d'entretoise 20 est symbolisée par une forme oblongue dessinée en traits pointillés.

Dans les modes de réalisation représentés, lors de l'utilisation normale du véhicule ne subissant pas de choc latéral, le dispositif d'entretoise d'impact 20 est orienté transversalement vers l'habitacle en s'étendant sensiblement horizontalement. En outre, de manière générale, le dispositif d'entretoise d'impact comprend un barreau qui est globalement cylindrique et qui est sensiblement tubulaire.

Le dispositif d'entretoise d'impact 20 est destiné à déterminer un certain temps entre un impact de choc latéral déformant le pied milieu 12 lors d'un accident et le contact de la paroi de garnissage du pied milieu avec l'ossature du siège. Dans la pratique, pour tester la résistance d'un véhicule lors d'un accident, divers protocoles de chocs sont utilisés.

Suivant un premier protocole, un choc latéral est réalisé en faisant entrer en contact un poteau rigide de diamètre 254 millimètres et le véhicule, sensiblement au regard du pied milieu. Suivant ce premier protocole, le mouvement relatif du véhicule et du poteau est sensiblement suivant la direction orthogonale à l'axe longitudinal du véhicule et la vitesse d'impact est sensiblement 29 km/h. Suivant un deuxième protocole, le mouvement relatif du véhicule du poteau est transversal mais avec un angle de soixante-quinze degrés relativement à l'axe longitudinal du véhicule, et la vitesse d'impact est sensiblement 32 km/h. Dans le cas du deuxième protocole, le pied milieu se déforme plus vite que dans le cas du premier protocole et son habillage entre plus rapidement au contact de l'ossature du siège, ce qui réduit le temps disponible pour le déploiement et le gonflement du sac gonflable latéral de protection de l'occupant du siège adjacent au pied milieu. Compte tenu de la faible distance séparant le garnissage de pied milieu 22 et l'ossature du siège, toute intrusion plus rapide ou localisée défavorablement est défavorable au temps disponible pour rendre effective la protection apportée par le sac gonflable.

Pour améliorer la situation au regard de l'augmentation la vitesse d'impact lors d'un choc latéral, un renforcement du système de structure de caisse et en particulier de son pied milieu serait peu efficace car les effets de l'augmentation de rigidité résultant du renforcement auraient tendance à se produire à la fin du choc alors que c'est au début de ce choc que le sac gonflable se déploie et se gonfle. En outre, un renforcement du système de structure est pénalise la masse du véhicule. Par ailleurs, augmenter le rendement de fonctionnement du sac gonflable obligerait à employer des technologies coûteuses. Avantageusement, le dispositif d'entretoise d'impact situé à la base du pied milieu permet d'augmenter le temps disponible au bon fonctionnement du sac gonflable en freinant le rapprochement du pied milieu relativement au siège.

L'armature de plancher 16 comprend deux traverses 16T qui supportent le siège par l'intermédiaire des rails 18R, en mettant en oeuvre des techniques connues de fixation de siège dans un véhicule. Pour que les figures soient claires, seules les deux traverses 16T sont représentées aux figures.

Pour ce qui concerne le siège, son ossature est complexe et de type classique, mais les figures montrent schématiquement les rails 18R, des flasques sensiblement verticaux et des organes de mécanisme 18M du siège. Les flasques s'étendent longitudinalement, en étant liés à coulissement sur les rails 18R. Parmi les flasques, des flasques inférieurs de coulissement 18L sont transversalement en regard de la base du pied milieu, à un niveau en hauteur au-dessus du longeron 14 bordant le bas de l'habitacle. Un flasque d'assise 18S est au-dessus des flasques inférieurs de coulissement 18L et des organes de mécanisme 18M du siège.

Les traverses 16T ont leurs extrémités latérales qui sont assemblées à une tôle intérieure 14N du longeron 14. Ce dernier comporte une tôle de base 14B qui est pliée en ayant plusieurs pans dont un pan vertical extérieur, un pan supérieur raccordé à un pan de la tôle intérieure 14N, un pan vertical interne et un pan inférieur raccordé au bas de ladite tôle intérieure.

Le pied milieu 12 comprend au moins une tôle externe 12X présentant une section horizontale sensiblement en U allant s'élargissant dans le bas de la base du pied milieu. Cette base est renforcée, côté habitacle, par une tôle de renfort 12R dont le haut est plaqué à la tôle externe 12X de pied milieu. La tôle de renfort 12R présente aussi une section horizontale sensiblement en U dont l'âme verticale et longitudinale, à sa partie haute, correspond à l'âme de la tôle externe 12X. Les jambes du U de la tôle de renfort 12R s'étendent sur la moitié des jambes de pan transversal de la tôle externe 12X du pied milieu. Le bas de la tôle de renfort 12R, s'étendant longitudinalement, est raccordé au bas de la tôle intérieure 14T du longeron.

L'âme verticale et longitudinale de la tôle de renfort 12R supporte le dispositif d'entretoise d'impact 20 par exemple par vissage ou par soudage. Ce dispositif d'entretoise d'impact 20 est supporté dans le pied milieu à son tronçon dans lequel la tôle de renfort 12R et la tôle externe 12X sont accolées au moins à leur âme.

Par ailleurs, le pied milieu 12 est couvert dans l'habitacle par le garnissage 22 en déterminant avec la tôlerie de pied milieu un espace sensiblement carré ou rectangulaire en considérant horizontalement sa surface disponible. Dans cet espace sont logés tant l'enrouleur 26 de ceinture de sécurité que le dispositif d'entretoise d'impact 20 qui est donc dissimulé de la vue des occupants de l'habitacle. Le dispositif d'entretoise d'impact 20 est à l'avant de l'enrouleur.

Le garnissage 22 comprend au moins une prédécoupe 22P faisant face au dispositif d'entretoise d'impact 20 pour assurer la création d'un orifice 24 par rupture programmée, cette rupture intervenant lors de la poussée dudit dispositif lors d'un choc latéral. Dans mode de réalisation, la prédécoupe 22P est une rainure circulaire d'affaiblissement de diamètre d'environ 35 millimètre à 40 millimètres, réalisée à la face du garnissage invisible de l'habitacle. Les solutions techniques d'affaiblissement de garnitures d'habillage sont bien connues par exemple pour laisser se déchirer une garniture cachant un sac gonflable de sécurité, cet habillage devant s'ouvrir pour permettre le déploiement dudit sac.

Le dispositif d'entretoise d'impact 20 peut avoir différentes formes permettant de maintenir, au moins pendant quelques brefs instants permettant le déploiement du sac gonflable, une certaine distance entre le pied milieu et l'ossature du siège. Il s'agit que ce dispositif puisse au moins momentanément résister aux efforts d'intrusion du pied milieu dans l'habitacle. Dans les modes de réalisation représentés, le dispositif d'entretoise d'impact 20 est globalement cylindrique et sensiblement tubulaire.

Dans le premier mode de réalisation du dispositif d'entretoise d'impact 20 tel que symbolisé de la figure 1 à la figure 4, un simple tube constitue ledit dispositif. Il s'agit d'un tube d'acier E275D de diamètre extérieur 25 millimètre et d'épaisseur 2,5 millimètres. Dans ce cas, lors d'un choc latéral, le dispositif d'entretoise d'impact 20 ne se compacte pas au fur et à mesure que le pied milieu 12 s'introduit dans l'habitacle et c'est l'ossature du siège qui permet de gérer les efforts de retenue d'intrusion.

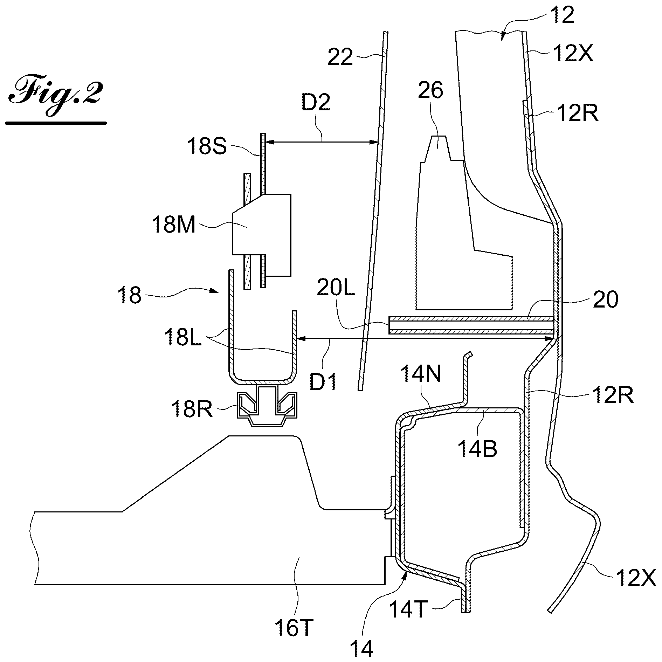

A la figure 2, le système de structure de caisse selon l'invention est dans un état de repos auquel une distance D1 sépare l'âme des tôles du pied milieu 12 et le flasque inférieur 18L de l'ossature du siège le plus proche de ce pied milieu. Le véhicule est ici en condition normale d'utilisation. L'extrémité libre 20L du tube formant le dispositif d'entretoise d'impact 20 est à distance dudit flasque 18L de l'ossature du siège le plus proche du pied milieu. Une distance dite de sécurité D2, symbolisant la distance nécessaire pour le déploiement et le gonflage de coussin gonflable de sécurité, sépare le garnissage 22 et le bord latéral de l'ossature 18 du siège, ce bord étant sensiblement vertical vers le haut à partir du flasque d'assise 18S représenté aux figures.

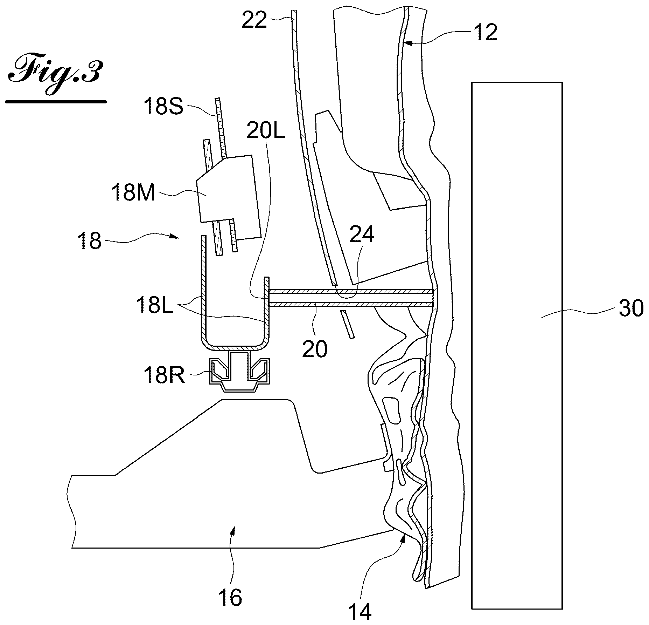

A la figure 3, le système de structure de caisse selon l'invention est dans un état de travail à déformation de pied milieu 12 lors d'un test de choc latéral. Le contact lors d'un choc entre le poteau 30 et le côté de caisse du véhicule au niveau de son pied milieu 12 entraîne une intrusion de ce pied milieu dans l'habitacle. Le longeron 14 est transversalement écrasé et les extrémités des traverses 16T sont déformées. L'extrémité libre 20L du tube formant le dispositif d'entretoise d'impact 20 vient alors au contact du flasque inférieur 18L le plus proche dans l'ossature du siège, après avoir traversé le garnissage 22 en créant par déchirement de ce dernier un orifice 24 en correspondance de la prédécoupe 22P prévue à cet effet. La distance D2 dite de sécurité est sensiblement conservée grâce à la présence du dispositif d'entretoise 20 séparant l'âme des tôles du pied milieu et l'ossature du siège. L'espace transversalement nécessaire pour le déploiement et le gonflage de coussin gonflable de sécurité est donc préservé.

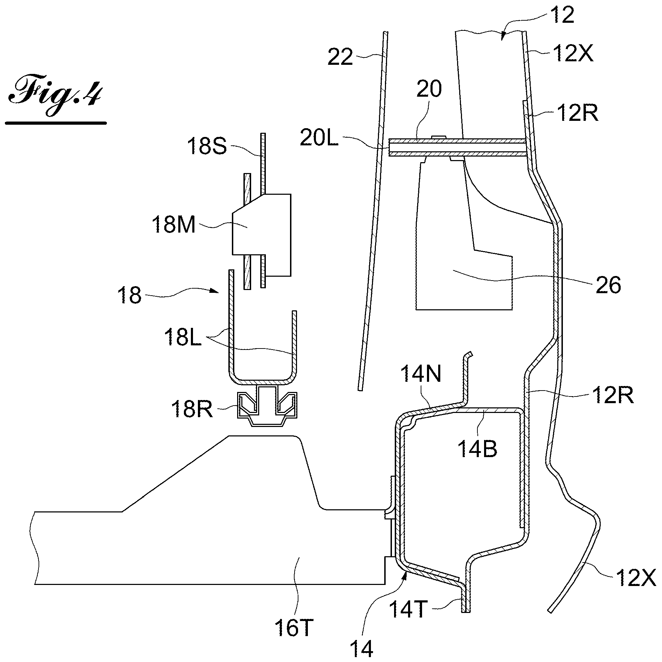

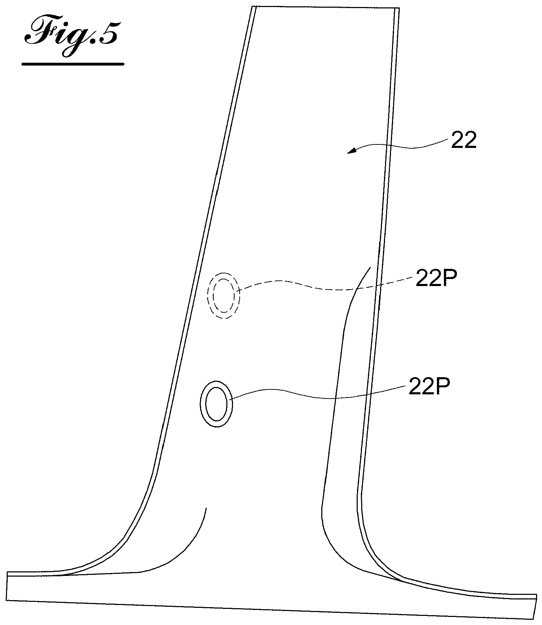

En variante du système de structure de caisse telle que représentée à la figure 4, le dispositif d'entretoise d'impact 20 est toujours à l'avant de l'enrouleur, mais il est en regard du haut de ce dernier. Il est donc plus haut par rapport au longeron 14. Le dispositif d'entretoise d'impact 20 est solidarisé au haut de la tôle de renfort 12R, ce haut de renfort étant plaqué à la tôle externe 12X de pied milieu. Le dispositif d'entretoise d'impact 20 est alors en regard du flasque d'assise 18S dans lequel il vient buter lors d'un choc latéral. Le principe de fonctionnement est le même que celui expliqué précédemment. L'effet du dispositif d'entretoise 20 est identique, même si le flasque de contact dans l'ossature du siège est différent. Le dispositif d'entretoise 20 traverse la garniture plus haut que précédemment, à l'emplacement de prédécoupe 22P symbolisé en traits pointillés à la figure 5. Dans le cas d'une garniture servant pour plusieurs modèles de véhicules à dispositif d'entretoise 20 disposés différemment, cette garniture peut avoir deux prédécoupes de traversée.

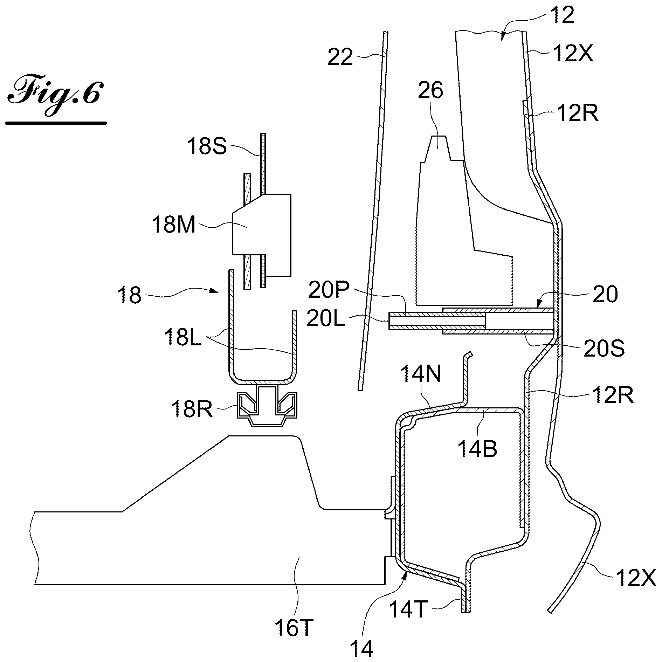

En variante du système de structure de caisse telle que représentée à la figure 6, le dispositif d'entretoise d'impact 20 est tubulaire mais de type télescopique à rétraction par effort déterminé de force de compression. Dans cette variante de réalisation, le dispositif d'entretoise 20 est réalisé en deux tubes pouvant coulisser l'un par rapport à l'autre, dont le frottement mutuel détermine le seuil de l'effort d'amorçage de coulissement. Au repos du dispositif d'entretoise 20, un tube de socle 20S est celui qui est fixement attaché au pied milieu, à sa tôle de renfort 12R et un tube d'espacement 20P est celui qui présente l'extrémité libre 20L venant heurter l'ossature du siège. Le tube de socle 20S entoure un tronçon du tube d'espacement 20P pour le supporter avec les frottements de seuil d'amorçage de rétraction à coulissement.

Par exemple, le tube de socle 20S est un tube d'acier E275D de diamètre extérieur 25 millimètre et d'épaisseur 2,5 millimètres. Le tube de socle 20P est un tube d'acier E275D de diamètre extérieur 20 millimètre et d'épaisseur 3 millimètres. Ces tubes sont montés à force l'un dans l'autre pour déterminer l'effort de déclenchement coulissement à rétraction.

Le principe de fonctionnement est proche de celui expliqué précédemment. Lors d'un choc latéral, le pied milieu se déplace avec intrusion dans l'habitacle, poussant le dispositif d'entretoise 20 au contact de l'un des flasques inférieurs 18L de l'ossature du siège, après avoir transpercé le garnissage 22 qui reste espacé de l'ossature du siège. Dans cette première phase de choc latéral, le coussin gonflable de sécurité a le temps de se déployer et de se gonfler latéralement au siège. Dans une deuxième phase du choc latéral, après gonflement dudit sac, le pied milieu 12 continue son intrusion dans l'habitacle et le dispositif d'entretoise 20 se déforme à rétraction par coulissement du tube d'espacement 20P dans le tube de socle 20S. Ainsi, au-delà d'un certains efforts de compression du pied milieu 12 dans l'ossature du siège, le dispositif d'entretoise 20 se rétracte en soulageant les efforts transmis à l'ossature du siège. Comme le sac gonflable de sécurité a eu le temps de se déployer et de se gonfler, le garnissage 22 peut, avec le déplacement du pied milieu, se rapprocher de l'ossature du siège. Avec ce mode de réalisation, l'efficacité du système de structure de caisse selon l'invention est étagée et la répartition de transmission des efforts du pied milieu 12 vers l'ossature 18 du siège par rapport au travail du sac gonflable de sécurité est optimisée.

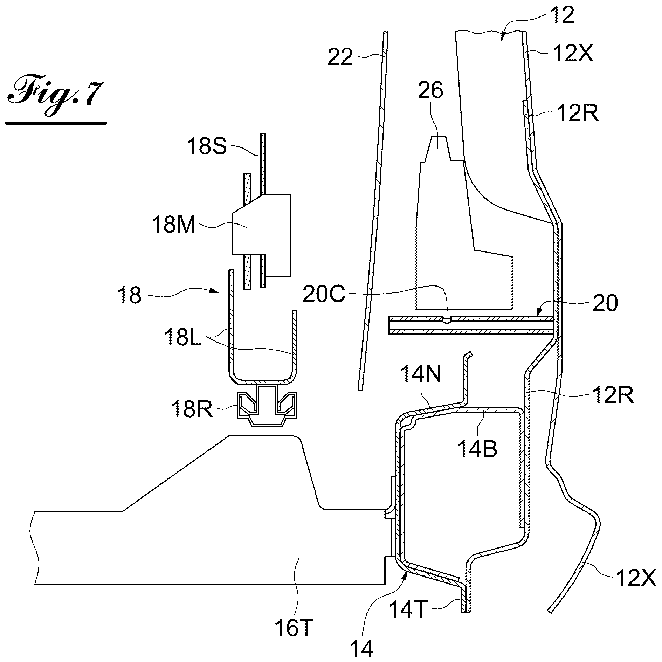

En variante du système de structure de caisse telle que représentée à la figure 7, le dispositif d'entretoise d'impact 20 est encore tubulaire mais son état de déformation ultérieur à son état de travail comme entretoise est obtenu non pas par coulissement de deux tubes mais par pliage d'un tube. Dans cette variante de réalisation, le dispositif d'entretoise d'impact 20 présente un creux d'affaiblissement ponctuel 20C à sa face supérieure. Ce creux 20C peut être une moulure constituée par un creux en demi-cylindre si le tube constituant le dispositif d'entretoise 20 est constitué par un tube à section par exemple carrée ou rectangulaire. Le creux 20C peut aussi être un trou creusé dans le dispositif d'entretoise 20 si ce dernier est constitué par un tube de section circulaire.

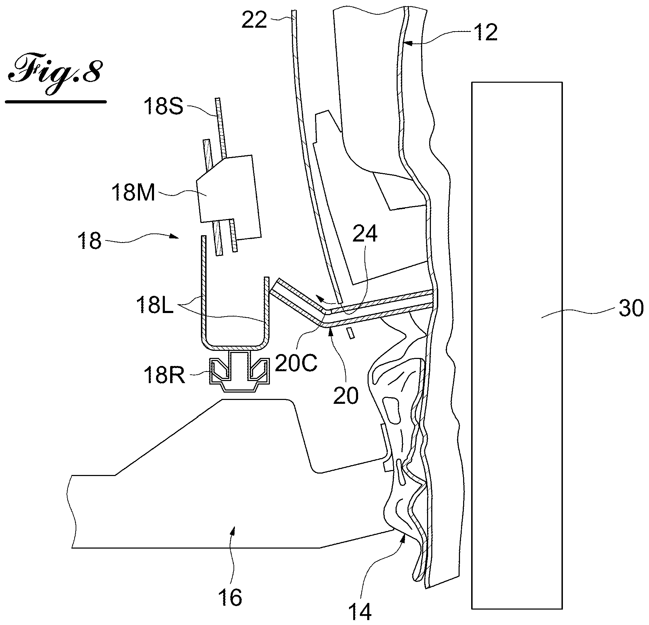

Le fonctionnement à déformation du pied milieu et le fonctionnement du dispositif d'entretoise 20 sont des fonctionnements proches de celui considéré dans le cadre du mode de réalisation télescopique. Dans le cas du dispositif d'entretoise avec le creux d'affaiblissement ponctuel 20C, dans la deuxième phase du choc latéral, la déformation programmée du dispositif d'entretoise est effectuée par pliage du tube constituant ce dernier au niveau du creux d'affaiblissement. Comme représentée à la figure 8, dans l'exemple de réalisation considérée, le pliage du dispositif d'entretoise 20 est effectué par déplacement vers le haut de l'extrémité libre du tube. Un déplacement avec pliage vers le bas pourrait être considéré en variante.

Le creux d'affaiblissement ponctuel 20C est avantageux car il permet de manière simple de réaliser un affaiblissement local du tube de dispositif d'entretoise 20 à une portion de sa section. Toute forme d'affaiblissement local ou tout pli localisé pour obtenir une déformation programmée est envisageable à titre de variante équivalente.

L'implantation du dispositif d'entretoise 20 dans le pied milieu est avantageuse par rapport à une fixation au longeron car il offre une plus grande diversité de positionnements en hauteur, en fonction de l'architecture de l'ossature du siège et en fonction de l'architecture d'implantation de ce dernier, qui peut être plus ou moins haut dans l'habitacle. En outre, la fixation du dispositif d'entretoise 20 au pied milieu permet une mise transmission d'effort vers le siège dès le début du choc, avant même la déformation du longeron. La fixation du dispositif d'entretoise 20 au pied milieu, à un renfort de ce dernier, permet d'optimiser la résistance du pied milieu et de retarder l'action dudit dispositif pour augmenter le temps disponible au déploiement du coussin gonflable de sécurité latéralement le long du siège. La disposition plus haute du dispositif d'entretoise 20 est aussi avantageuse dans le cas d'un choc latéral par un véhicule haut qui impacte plus haut dans le pied milieu lors du choc.

La forme tubulaire du dispositif d'entretoise d'impact 20 permet d'optimiser la masse de ce dernier au regard de sa résistance axiale. Les caractéristiques de rétraction améliorent encore l'efficacité du dispositif d'entretoise 20 après le début du choc latéral, quand le coussin gonflable de sécurité, par exemple de type rideau, a eu le temps de se déployer et de se gonfler latéralement au siège. Ainsi, le dispositif d'entretoise d'impact est temporaire en pouvant d'une part constituer suffisamment longtemps une entretoise entre le pied milieu et l'ossature du siège puis d'autre part se compacter pendant le choc latéral.

## Revendications

1. Système de structure de caisse de véhicule automobile comprenant un entretoisement de choc latéral, un pied milieu (12) raccordé à un longeron (14) et à une armature de plancher (16) susceptible de recevoir à fixation un siège dans l'habitacle du véhicule à l'intérieur de ladite structure, pour l'entretoisement de choc latéral, le pied milieu (12) supporte, à sa base susceptible d'être au regard d'une ossature (18) du siège, au-dessus du longeron (14) et de l'armature du plancher (16), un dispositif d'entretoise d'impact (20) orienté transversalement vers l'habitacle et susceptible d'entrer au contact de l'ossature (18) de siège en cas de choc latéral du véhicule déformant transversalement la base du pied milieu, **caractérisé en ce que** le dispositif d'entretoise d'impact (20) est temporaire en pouvant d'une part constituer suffisamment longtemps une entretoise entre le pied milieu (12) et l'ossature du siège puis d'autre part se compacter pendant le choc latéral.

2. Système selon la revendication 1, **caractérisé en ce que** le pied milieu (12) comporte à sa base une tôle de renfort (12R) qui supporte le dispositif d'entretoise d'impact (20).

3. Système selon la revendication 1 ou 2, **caractérisé en ce que** le dispositif d'entretoise d'impact (20) est orienté transversalement vers l'habitacle en s'étendant sensiblement horizontalement.

4. Système selon l'une quelconque des revendications précédentes, **caractérisé en ce que** le dispositif d'entretoise d'impact (20) comprend deux tubes (20S, 20P) engagés l'un d'ans l'autre de manière télescopique en pouvant coulisser mutuellement à partir d'un effort déterminé de compression.

5. Système selon l'une quelconque des revendications 1 à 3, **caractérisé en ce que** le dispositif d'entretoise d'impact (20) comprend un tube présentant un affaiblissement local (20C) à une portion de sa section.

6. Système selon l'une quelconque des revendications précédentes, **caractérisé en ce que** le pied milieu (12) supporte à sa base le dispositif d'entretoise d'impact (20), cette base étant à un tronçon dudit pied milieu comportant une section horizontale sensiblement en U en supportant le dispositif d'entretoise à partir de l'âme sensiblement longitudinale du U.

7. Système selon l'une quelconque des revendications précédentes, **caractérisé en ce que** le dispositif d'entretoise d'impact (20) comprend un barreau qui est sensiblement tubulaire.

8. Véhicule automobile comportant un système de structure de caisse (10) comprenant un entretoisement de choc latéral, un pied milieu (12) raccordé à un longeron (14) et à une armature de plancher (16) recevant à fixation un siège dans l'habitacle du véhicule à l'intérieur de ladite structure, **caractérisé en ce que** le système de structure de caisse (10) est conforme à l'une quelconque des revendications précédentes et, pour l'entretoisement de choc latéral, le pied milieu (12) supporte, à sa base au regard d'une ossature (18) du siège, au-dessus du longeron (14) et de l'armature du plancher (16), le dispositif d'entretoise d'impact (20) orienté transversalement vers l'habitacle et susceptible d'entrer au contact de l'ossature de siège en cas de choc latéral du véhicule déformant transversalement la base du pied milieu.

9. Véhicule selon la revendication 8, **caractérisé en ce que** le système de structure (10) supporte à la base de pied milieu (12), au-dessus du longeron (14), un enrouleur de ceinture de sécurité (26) et le dispositif d'entretoise d'impact (20) est à l'avant de l'enrouleur, sensiblement à hauteur de ce dernier.

## Patentansprüche

1. Kraftfahrzeug-Rohkarosseriestruktursystem, das eine Seitenaufprallverstrebung, einen Mittenfuß (12), der an einen Längsträger (14) und an eine Fußbodenbewehrung (16) angeschlossen ist, umfasst, die zum Befestigen einen Sitz in der Fahrgastzelle des Fahrzeugs in dem Inneren der Struktur, für das Seitenaufprallverstreben aufnehmen kann, der Mittenfuß (12) an seiner Basis, die gegenüber einem Gestell (18) des Sitzes liegen kann, über dem Längsträger (14) und der Fußbodenbewehrung (16) eine Aufprallabstandhaltervorrichtung (20) stützt, die quer zu der Fahrgastzelle ausgerichtet ist und mit dem Sitzgestell (18) bei einem Seitenaufprall des Fahrzeugs, der die Basis des Mittenfußes quer verformt, in Berührung treten kann, **dadurch gekennzeichnet, dass** die Aufprallabstandhaltervorrichtung (20) zeitweilig ist, indem sie einerseits ausreichend lang einen Abstandshalter zwischen dem Mittenfuß (12) und dem Gestell des Sitzes bilden kann, und sich andererseits während des Seitenaufpralls kompaktieren kann.

2. System nach Anspruch 1, **dadurch gekennzeichnet, dass** der Mittenfuß (12) an seiner Basis ein Verstärkungsblech (12R) umfasst, das die Aufprallabstandhaltervorrichtung (20) stützt.

3. System nach Anspruch 1 oder 2, **dadurch gekennzeichnet, dass** die Aufprallabstandhaltervorrichtung (20) quer zu der Fahrgastzelle ausgerichtet ist, indem sie sich im Wesentlichen horizontal erstreckt.

4. System nach einem der vorhergehenden Ansprüche, **dadurch gekennzeichnet, dass** die Aufprallabstandhaltervorrichtung (20) zwei Rohre (20S, 20P) umfasst, die ineinander teleskopisch eingefügt sind, wobei sie zueinander ausgehend von einer bestimmten Kompressionskraft gleiten können.

5. System nach einem der Ansprüche 1 bis 3, **dadurch gekennzeichnet, dass** die Aufprallabstandhaltervorrichtung (20) eine Röhre umfasst, die eine lokale Schwächung (20C) an einem Abschnitt ihres Querschnitts umfasst.

6. System nach einem der vorhergehenden Ansprüche, **dadurch gekennzeichnet, dass** der Mittenfuß (12) an seiner Basis die Aufprallabstandhaltervorrichtung (20) stützt, wobei diese Basis an einem Abschnitt des Mittenfußes ist, der einen horizontalen Querschnitt im Wesentlichen in U-Form umfasst, wobei die Abstandshaltervorrichtung ausgehend von der im Wesentlichen längs verlaufenden Seele des U gestützt wird.

7. System nach einem der vorhergehenden Ansprüche, **dadurch gekennzeichnet, dass** die Aufprallabstandhaltervorrichtung (20) eine Stange umfasst, die im Wesentlichen röhrenförmig ist.

8. Kraftfahrzeug, das ein Rohkarosseriestruktursystem (10) umfasst, das eine Seitenaufprallverstrebung, einen Mittenfuß (12), der an einen Längsträger (14) und eine Fussbodenbewehrung (16), die einen Sitz zum Befestigen in der Fahrgastzelle des Fahrzeugs in dem Inneren der Struktur aufnimmt, angeschlossen ist, **dadurch gekennzeichnet, dass** das Rohkarosseriestruktursystem (10) einem der vorhergehenden Ansprüche entspricht und der Mittenfuß (12) für die Seitenaufprallverstrebung an seiner Basis gegenüber einem Gestell (18) des Sitzes, über dem Längsträger (14) und der Fussbodenbewehrung (16) die Aufprallabstandhaltervorrichtung (20) stützt, die quer zu der Fahrgastzelle ausgerichtet ist und mit dem Sitzgestell bei einem Seitenaufprall des Fahrzeugs, der die Basis des Mittenfußes quer verformt, in Berührung treten kann.

9. Fahrzeug nach Anspruch 8, **dadurch gekennzeichnet, dass** das Struktursystem (10) an der Basis des Mittenfußes (12), über dem Längsträger (14) einen Sicherheitsgurtaufroller (26) trägt, und dass die Aufprallabstandhaltervorrichtung (20) an der Vorderseite des Aufrollers im Wesentlichen in dessen Höhe liegt.

## Claims

1. A motor vehicle shell structure system comprising a side impact brace, a centre pillar (12) connected to a side rail (14) and to a floor reinforcement (16) able to accept fixedly a seat in the passenger compartment of the vehicle inside said structure, for the bracing of side impact, the centre pillar (12) supports, at its base capable of facing a framework (18) of the seat, above the side rail (14) and the floor reinforcement (16), an impact brace device (20) oriented transversely toward the passenger compartment and capable of coming into contact with the seat framework (18) in the event of side impact to the vehicle transversely deforming the base of the centre pillar, **characterized in that** the impact brace device (20) is temporary, being able on the one hand to constitute for a sufficiently long time a brace between the centre pillar (12) and the framework of the seat, then on the other hand to become compact during the side impact.

2. The system according to Claim 1, **characterized in that** the centre pillar (12) comprises at its base a reinforcement plate (12R) which supports the impact brace device (20).

3. The system according to Claim 1 or 2, **characterized in that** the impact brace device (20) is oriented transversely toward the passenger compartment by extending substantially horizontally.

4. The system according to any one of the preceding claims, **characterized in that** the impact brace device (20) comprises two tubes (20S, 20P) engaged one in the other in a telescopic manner, by being able to slide mutually starting from a defined compression force.

5. The system according to any one of Claims 1 to 3, **characterized in that** the impact brace device (20) comprises a tube having a local weakening (20C) at a portion of its section.

6. The system according to any one of the preceding claims, **characterized in that** the centre pillar (12) supports at its base the impact brace device (20), this base being at a portion of said centre pillar comprising a substantially U-shaped horizontal section, supporting the brace device from the substantially longitudinal web of the U.

7. The system according to any one of the preceding claims, **characterized in that** the impact brace device (20) comprises a bar which is substantially tubular.

8. A motor vehicle including a body shell structure (10) comprising a side impact brace, a centre pillar (12) connected to a side rail (14) and to a floor reinforcement (16) receiving fixedly a seat in the passenger compartment of the vehicle inside said structure, **characterized in that** the body shell structure (10) is in accordance with any one of the preceding claims and, for the bracing of side impact, the centre pillar (12) supports, at its base facing a framework (18) of the seat, above the side rail (14) and the floor reinforcement (16), the impact brace device (20) oriented transversely toward the passenger compartment and capable of coming into contact with the seat framework in the event of side impact of the vehicle transversely deforming the base of the centre pillar.

9. The vehicle according to Claim 8, **characterized in that** the structure system (10) supports at the base of the centre pillar (12), above the side rail (14), a safety belt retractor (26) and the impact brace device (20) is at the front of the retractor, substantially at the height of the latter.
